# EUROPÄISCHE PATENTSCHRIFT

(11) **EP 1 513 227 B1**
(45) Veröffentlichungstag und Bekanntmachung des Hinweises auf die Patenterteilung: **29.12.2010**
(21) Anmeldenummer: 04019454.0
(22) Anmeldetag: 17.08.2004
(51) Int. Cl.: H01R 13/66, H01R 103/00

(54) **Vorrichtung zur Führung eines fliessfähigen Mediums mit elektrischer Beheizung**
Fluid conducting system with integrated electrical heater element
Dispositif conducteur de fluide avec chauffage électrique intégré

(30) Priorität: 03.09.2003 DE 10340467
(43) Veröffentlichungstag der Anmeldung: 09.03.2005
(73) Patentinhaber: MAN Nutzfahrzeuge Aktiengesellschaft, 80995 München (DE)
(72) Erfinder: Später, Dirk, 84437 Ramsau (DE)

(56) Entgegenhaltungen:
- DE-A- 10 203 288
- US-A- 4 018 493
- US-A- 4 969 837
- US-A1- 2002 058 436

## Beschreibung

Die Erfindung betrifft eine Vorrichtung zur Führung eines fließfähigen Mediums mit einer Leitung für das fließfähige Medium und mit an den Leitungsenden vorgesehenen Steckkupplungselementen, welche mit Verbindungselementen mediumsdicht mit den Leitungsenden verbunden sind, wobei entlang der Leitung wenigstens ein elektrischer Leiter geführt ist. Der wenigstens eine elektrische Leiter ist zur Beheizung der insbesondere als Harnstoffleitung ausgebildeten Leitung in einem Katalysatorsystem zur NOₓ-Reduktion sauerstoffhaltiger Abgase eines Kraftfahrzeugs ausgebildet.

Bei derartigen Leitungen, welche als feste, flexible oder teilflexible Rohre oder als Schläuche ausgebildet sein können und in denen gasförmige oder flüssige Medien transportiert werden, ergeben sich Schwierigkeiten bei der Abdichtung der Steckkupplungselemente, insbesondere Stecker gegenüber der mit dem elektrischen Leiter ausgestatteten Leitung, sowohl durch Auswirkungen von außen (z. B. durch Schwallwasser) wie von innen (z. B. durch undichte Verbindungen).

Aus der US-Patentanmeldung Nr. 200210058436 A1 (Toshikazu Saba) ist eine Vorrichtung gemäß dem Oberbegriff des Patentanspruchs 1 bekannt.

Aufgabe der Erfindung ist es daher, eine Vorrichtung der eingangs genannten Art zu schaffen, bei welcher die Steckkupplungselemente gegenüber der mit dem elektrischen Leiter ausgestatteten Leitung unter Zuhilfenahme einfacher konstruktiver Mittel abgedichtet sind.

Diese Aufgabe wird erfindungsgemäß durch die kennzeichnenden Merkmale des Patentanspruches 1 gelöst.

Bei der Erfindung sind Leiterenden des elektrischen Leiters an wenigstens einem der beiden Leitungsenden in einer Umhüllung mediumsdicht gegenüber der mit dem Steckkupplungselement verbundenen Leitung angeordnet. Die Umhüllung ist als Gehäuse ausgebildet. Hierdurch wird mit einfachen Mitteln, insbesondere gegenüber den Enden des elektrischen Leiters, eine Abdichtung des im Leitungsende integrierten Steckkupplungselementes erreicht.

Die beiden Leiterenden des elektrischen Leiters können in der Umhüllung mit elektrischen Anschlüssen verbunden werden. Hierbei kann es sich um Steckerkontakte eines elektrischen Anschlusssteckers oder um elektrische Verbindungsleitungen, wie Drähte, Litzen oder andere elektrische Kontakte handeln.

Am anderen Leitungsende können die beiden Leiterenden des elektrischen Leiters mit einer elektrischen Einrichtung oder elektrischen Verschaltung verbunden sein. Hierbei kann es sich um eine Klemme, Lötstelle oder sonstige elektrische Verbindung handeln. Es kann sich dabei jedoch auch um ein elektronisches/elektrisches Bauteil, beispielsweise einen Chip, elektrischen Widerstand, ein Relais oder einen Sensor oder einen anderen elektrischen Verbraucher handeln. Ferner kann es sich bei der elektrischen Einrichtung und elektrischen Verschaltung um eine komplette elektrische/elektronische Baugruppe oder Schaltung handeln.

Bei der das flüssige Medium führenden Leitung kann es sich um ein festes, flexibles oder teilflexibles Rohr oder um einen Schlauch handeln.

Der elektrische Leiter, welcher entlang dieser Leitung geführt ist und an oder in dieser Leitung angeordnet sein kann, kann zur Stromführung dienen oder - wie bereits oben angesprochen - als elektrischer Verbraucher, beispielsweise in Form einer Heizung, eines Messelements, Steuerelementes oder Sensors oder als Kombination dieser Einrichtungen ausgebildet sein. Beim elektrischen Leiter kann es sich um einen oder mehrere Drähte oder Litzen, um eine oder mehrere elektrisch leitende Schichten, Geflechte, Gewirke oder um die als Rohr oder Schlauch ausgebildete Leitung selbst handeln.

Bei einer bevorzugten Ausführungsform ist die Umhüllung um das Verbindungselement, mit welchem das Steckkupplungselement mediumsdicht mit dem Leitungsende verbunden ist, angeordnet. Das Verbindungselement umschließt hierbei das Leitungsende, welches auf das Steckkupplungselement aufgeschoben ist, mit Presssitz und ist beispielsweise als Pressring ausgebildet. Die Umhüllung kann als vorgeformtes Gehäuse, als geformte Gießmasse oder dergleichen ausgebildet sein.

Ferner kann eine den Umfang der Leitung umfassende Dichtung zwischen der Umhüllung und der Leitung angeordnet sein. Die Dichtung ist vorzugsweise im Bereich des auf das Steckkupplungselement aufgeschobenen Leitungsendes vorgesehen. Die Umhüllung ist mit dem Steckkupplungselement, welches beispielsweise als Stecker der Steckkupplung ausgebildet ist, fest verbunden. Die feste Verbindung kann durch Verklipsen, Verkleben, Verschweißen oder dergleichen erfolgen. Die feste Verbindung der Umhüllung mit dem Steckkupplungselement ist hierbei mediumsdicht, d.h. gas- oder flüssigkeitsdicht.

Die Erfindung kann bei mobilen Einrichtungen, insbesondere Kraftfahrzeugen, sowie bei stationären Einrichtungen, wie Labors, Versuchsaufbauten und dergleichen, zum Einsatz kommen. Eine bevorzugte Anwendung erfolgt in der Harnstoffleitung zur Zuführung von Harnstoffwasserlösung (ad blue) in ein Katalysatorsystem für die NOₓ-Reduktion in sauerstoffhaltigen Abgasen von Kraftfahrzeugen, insbesondere Nutzfahrzeugen, wie es beispielsweise aus EP 0 555 746 B1 bekannt ist. Hierbei kann der elektrische Leiter vorzugsweise als Heizung für die Harnstoffleitung dienen.

Anhand der Figuren wird an Ausführungsbeispielen die Erfindung noch näher erläutert.

Es zeigt
Fig. 1 ein erstes Ausführungsbeispiel eines Leitungsendes einer Leitung mit integrierten Steckkupplungselement und integriertem elektrischem Anschluss
Fig. 2 ein Ausführungsbeispiel eines weiteren Leitungselementes der Leitung mit integriertem Steckkupplungselement und
Fig. 3 ein weiteres Ausführungsbeispiel für ein Leitungsende mit integriertem Steckkupplungselement einer mit einem elektrischen Leiter ausgestatteten Leitung.

Eine in den Figuren dargestellte Leitung 1 dient zur Führung eines gasförmigen oder flüssigen Mediums, beispielsweise zur Führung von Harnstoffwasserlösung in einem Katalysatorsystem zur NOₓ-Reduktion von sauerstoffhaltigen Abgasen in Kraftfahrzeugen, insbesondere Nutzfahrzeugen. Die Leitung 1 kann jedoch auch in anderen mobilen Einrichtungen und stationären Einrichtungen Verwendung finden. Die Leitung 1 kann als Schlauch oder als festes, flexibles oder teilflexibles Rohr ausgebildet sein.

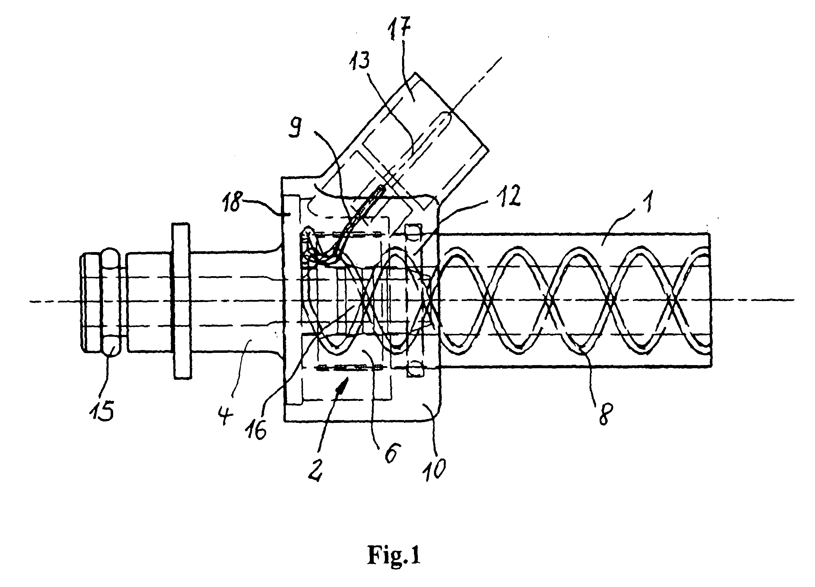

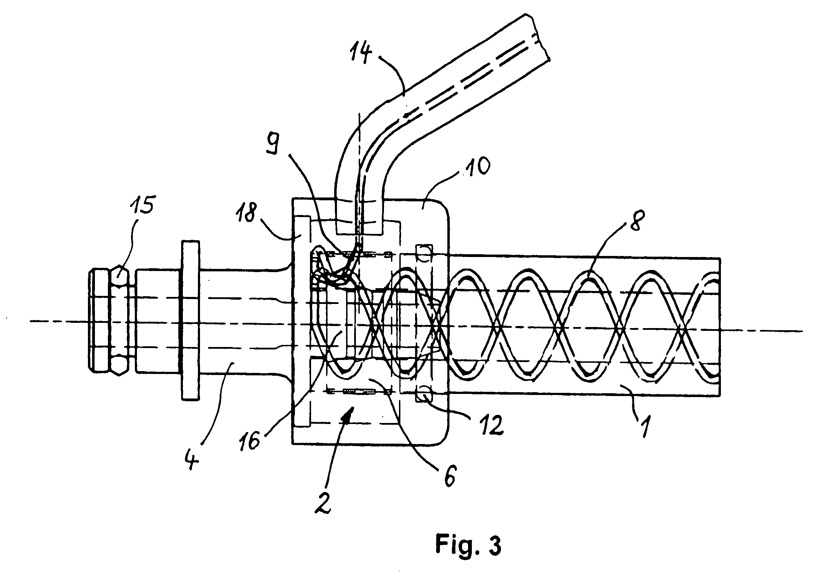

Ein erstes Leitungsende 2 (Fig. 1 oder Fig. 3) ist mit einem als Stecker ausgebildeten Steckkupplungselement 4 fest verbunden. Hierzu ist das Leitungsende 2 über einen Stutzen 16 des Steckkupplungselementes 4 geschoben. Mit einem als Pressring ausgebildeten Verbindungselement 6, welches das Leitungsende 2 umfasst, erfolgt eine mediumsdichte, d.h. gas- oder flüssigkeitsdichte Verbindung zwischen dem Stutzen 16 des Steckkupplungselementes 4 und dem aufgeschobenen Leitungsende 2.

Leiterenden 9 eines im oder an der Leitung 1 vorgesehenen elektrischen Leiters 8 sind in einer als Gehäuse ausgebildeten Umhüllung 10 angeordnet. Die Umhüllung 10 ist zur Leitung 1, insbesondere zum Leitungsende 2 hin mit einer als O-Ring ausgebildeten umlaufenden Dichtung 12 abgedichtet. Anstelle des O-Ringes kann auch eine Dichtmasse oder Verklebung und dergleichen vorgesehen sein. Ein in der als Gehäuse ausgebildeten Umhüllung 10 vorhandener Hohlraum, in welchen die Leiterenden 9 ragen, kann mit einer Vergussmasse ausgefüllt sein.

Die Umhüllung 10 ist mit einem Flansch 18 des als Stecker ausgebildeten Steckkupplungselementes 4, insbesondere am Flanschumfang dicht und fest verbunden. Dies kann durch Verkleben, Verklipsen, Verschweißen oder dergleichen erfolgen.

Beim Ausführungsbeispiel der Fig. 1 sind die Leiterenden 9 mit als Steckerkontakte ausgebildeten elektrischen Anschlüssen 13 einer Steckerbuchse 17 elektrisch verbunden. Die Steckerbuchse 17 ist an die als Gehäuse ausgebildete Umhüllung 10 angeformt. Über die elektrischen Anschlüsse 13 kann ein Anschluss an eine außerhalb der Leitung 1 befindliche elektrische Einrichtung, beispielsweise Stromversorgungsquelle, Steuereinrichtung und dergleichen, erfolgen. In einem Kraftfahrzeug, insbesondere Nutzfahrzeug kann ein Anschluss an den CAN-Bus des Fahrzeugs erfolgen.

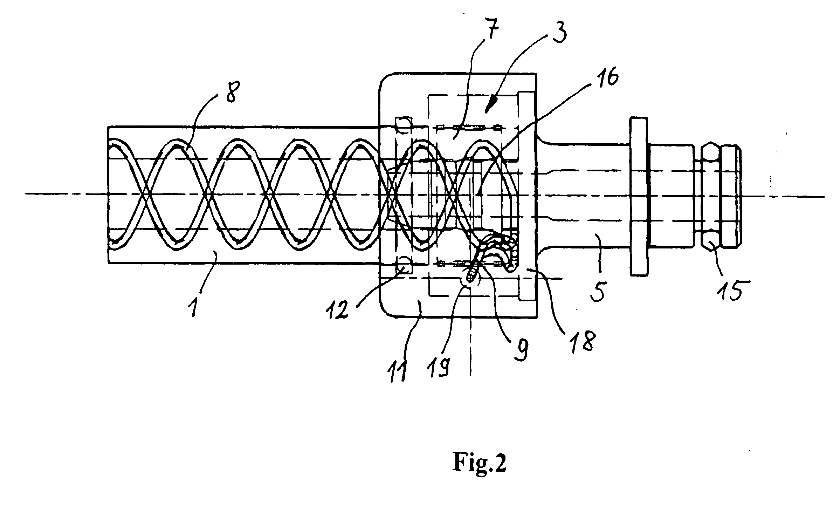

In der Fig. 2 ist ein mögliches weiteres Leitungsende 3 der Leitung 1 dargestellt.

Die Verbindung zwischen dem Leitungsende 3 der Leitung 1 mit dem Stutzen 16 eines ebenfalls als Stecker ausgebildeten Steckkupplungselementes 5 erfolgt in der gleichen Weise, wie bei den Fig. 1 und 3, mit einem als Pressring ausgebildeten Verbindungselement 7, welches das Leitungsende 3 mit Presssitz umgibt. Ferner erfolgt die Verbindung einer ebenfalls als Gehäuse ausgebildeten Umhüllung 11 mit dem Flansch 18 des Steckkupplungselementes 5 in der gleichen Weise wie am Leitungsende 2 in den Fig. 1 und 3. Die Umhüllung 11 ist ebenfalls mit einer als O-Ring ausgebildeten Dichtung 12 gegenüber der Leitung 1 bzw. dem Leitungsende 3 abgedichtet. Für die umlaufende Dichtung 12 kann ebenfalls eine Dichtmasse oder Verklebung vorgesehen sein.

Die Leiterenden 9 des elektrischen Leiters 8 sind in der Umhüllung 11 mit einer elektrischen Einrichtung 19 oder elektrischen Verschaltung verbunden. Bei der elektrischen Einrichtung 19 oder Verschaltung kann es sich um eine Klemme, Lötstelle oder eine sonstige elektrische Verbindung handeln. Es kann auch ein elektrischer Verbraucher, beispielsweise ein Widerstand, ein Relais, Sensor, ein Chip oder dergleichen oder eine elektrische/elektronische Baugruppe oder Schaltung vorgesehen sein.

Bei den in den Figuren dargestellten Ausführungsbeispielen ist der Leiter 8 wendelförmig ausgebildet. Der elektrische Leiter 8 kann jedoch auch in anderer Form vorliegen und aus einem oder mehreren Drähten oder Litzen, aus einer oder mehreren elektrisch leitenden Schichten, aus einem Geflecht oder Geflechten, Gewirke oder dergleichen gebildet sein.

Der elektrische Leiter 8 kann die Funktion einer Stromführung, einer Heizung, eines Messelementes, eines Steuerelementes, Sensors oder einer Kombination davon aufweisen. Vorzugsweise kann der elektrische Leiter 8 als Heizung der als Harnstoffleitung ausgebildeten Leitung 1 in einem Katalysatorsystem zur NOₓ-Reduktion von sauerstoffhaltigen Abgasen eines Kraftfahrzeugs, insbesondere Nutzfahrzeugs, dienen.

Bei dem in der Fig. 3 dargestellten Ausführungsbeispiel sind die Leiterenden 9 des elektrischen Leiters 8 beispielsweise durch Löten oder dergleichen elektrisch mit von außen in die Umhüllung 10 eingeführten Anschlussleitungen verbunden. Die Anschlussleitungen bilden elektrische Anschlüsse 14, welche die elektrische Verbindung zu Einrichtungen, wie sie oben beispielsweise genannt sind, herstellen können. Die Ausbildung der elektrischen Anschlüsse 13 (Fig. 1) oder 14 (Fig. 3) kann hinsichtlich Position, Winkelanordnung, Einführungsart und Bauart variabel gestaltet sein.

In den Ausführungsbeispielen der Figuren sind die Steckkupplungselemente 4 und 5 als Stecker einer Steckkupplung ausgebildet. Für eine mediumsdichte Verbindung mit dem jeweils zweiten nicht näher dargestellten Steckkupplungselement sind O-Ringe 15 an den jeweiligen Steckerstutzen vorgesehen.

Hierdurch werden an den jeweiligen Leitungsenden 2 und 3 Steckkupplungen für flüssige oder gasförmige Medien geschaffen mit integrierter elektrischer Verschaltung, wobei eine Abdichtung der elektrischen Verschaltung gegenüber dem flüssigen oder gasförmigen Medien sowie gegenüber der schlauch- oder rohrförmigen Leitung 1 erreicht wird.

### Bezugszeichenliste

- 1: Leitung
- 2,3: Leitungsenden
- 4,5: Steckkupplungselemente (Stecker)
- 6,7: Verbindungselemente (Pressringe)
- 8: elektrischer Leiter
- 9: Leiterenden
- 10,11: Umhüllungen (Gehäuse)
- 12: Dichtung (O-Ring)
- 13: elektrische Anschlüsse (Steckerkontakte)
- 14: elektrische Anschlüsse (Anschlussleitungen)
- 15: O-Ring am Stecker
- 16: Stutzen
- 17: Steckerbuchse
- 18: Flansch
- 19: elektrische Einrichtung oder Verschaltung

## Patentansprüche

1. Vorrichtung zur Führung einer Flüssigkeit mit einer Leitung (1) für die Flüssigkeit und mit an den Leitungsenden (2, 3) vorgesehenen Steckkupplungselementen (4), welche mit Verbindungselementen (6) mediumsdicht mit den Leitungsenden (2, 3) verbunden sind, wobei entlang der Leitung (1) wenigstens ein elektrischer Leiter verläuft, **dadurch gekennzeichnet, dass** Leiterenden (9) des wenigstens einen elektrischen Leiters (8) an wenigstens einem der beiden Leitungsenden (2, 3) in einer Umhüllung (10, 11) mediumsdicht gegenüber der mit dem Steckkupplungselement (4, 5) verbundenen Leitung (1) angeordnet sind, wobei die Umhüllung (10, 11) als Gehäuse ausgebildet ist und die Leiterenden (9) des elektrischen Leiters (8) in der Umhüllung (10; 11 mit einer elektrischen Einrichtung oder einer elektrischen Verschaltung (19) verbunden sind,
**dadurch gekennzeichnet,**
**dass** der wenigstens eine elektrische Leiter (8) zur Beheizung der insbesondere als Harnstoffleitung ausgebildeten Leitung (1) in einem Katalysatorsystem zur NOₓ-Reduktion sauerstoffhaltiger Abgase eines Kraftfahrzeugs ausgebildet ist.

2. Vorrichtung nach Anspruch 1, **dadurch gekennzeichnet, dass** die Umhüllung (10, 11) um das Verbindungselement (6, 7), welches mit Presssitz das auf das Steckkupplungselement (4, 5) aufgeschobene Leitungsende (2, 3) umschließt, angeordnet ist.

3. Vorrichtung nach Anspruch 1 oder 2, **dadurch gekennzeichnet, dass** zwischen der Umhüllung (10, 11) und der Leitung (1) eine den Umfang der Leitung (1) umfassende Dichtung (12) angeordnet ist.

4. Vorrichtung nach einem der Ansprüche 1 bis 3, **dadurch gekennzeichnet, dass** die Umhüllung (10, 11) mit dem Steckkupplungselement (4, 5) dicht verbunden ist.

5. Vorrichtung nach einem der Ansprüche 1 bis 4, **dadurch gekennzeichnet, dass** die beiden Leiterenden (9) des elektrischen Leiters (8) an einem der beiden Leitungsenden (2, 3) mit elektrischen Anschlüssen (13; 14) verbunden sind.

6. Vorrichtung nach einem der Ansprüche 1 bis 5, **dadurch gekennzeichnet, dass** der wenigstens eine elektrische Leiter (8) an oder in der Leitung (1) angeordnet ist.

7. Vorrichtung nach einem der Ansprüche 1 bis 6. **dadurch gekennzeichnet, dass** der wenigstens eine elektrische Leiter (8) ein elektrischer Verbraucher ist.

## Claims

1. Fluid conducting system with a line (1) for the fluid and with plug connector elements (4) provided at the ends of the line (2, 3), which plug connector elements are connected to the ends of the line (2, 3) with connecting elements (6) forming a joint that is sealed against the medium, where at least one electrical conductor runs along the line (1), **characterised in that** conductor ends (9) of the electrical conductor (8), of which there is at least one, on at least one of the two line ends (2, 3) is arranged in a sheath (10, 11), which sheath is sealed against the medium towards the line (1) that is connected with the plug connector element (4, 5), where the sheath (10, 11) is designed as a housing and the conductor ends (9) of the electrical conductor (8) are connected inside the sheath (10, 11) to an electrical device or an electrical relay (19), **characterised in that** the electrical conductor (8), of which there is at least one, is designed for heating of the line (1) designed especially as a urea line in a catalytic converter system for reducing NOₓ in motor vehicle exhaust gases containing oxygen.

2. System in accordance with claim 1, **characterised in that** the sheath (10, 11) is arranged around the connecting element (6, 7), which connecting element envelops the line end (2, 3) pushed onto the plug connector element (4, 5) with a press fit.

3. System in accordance with claim 1 or 2, **characterised in that** a seal (12) spanning the circumference of the line (1) is arranged between the sheath (10, 11) and the line (1).

4. System in accordance with one of claims 1 to 3, **characterised in that** the sheath (10, 11) is connected in a sealed manner to the plug connector element (4,5).

5. System in accordance with one of claims 1 to 4, **characterised in that** the two conductor ends (9) of the electrical conductor (8) are connected to one of the two line ends (2, 3) using electrical connectors (13, 14).

6. System in accordance with one of claims 1 to 5, **characterised in that** the electrical conductor (8), of which there is at least one, is arranged on or in the line (1).

7. System in accordance with one of claims 1 to 6, **characterised in that** the electrical conductor (8), of which there is at least one, is an electrical consumer.

## Revendications

1. Dispositif de guidage d'un fluide avec une conduite (1) de fluide et des éléments de raccordement enfichables (4) prévus aux extrémités (2, 3) de la conduite, ces éléments de raccordement enfichables étant reliés de manière étanche au fluide aux extrémités (2, 3) de la conduite au moyen d'éléments de liaison (6), auquel cas au moins un conducteur électrique chemine le long de la conduite (1), **caractérisé en ce que** des extrémités (9) du conducteur électrique (8) au minimum sont disposées sur au moins l'une des deux extrémités (2, 3) de la conduite dans une enveloppe (10, 11) de manière étanche au fluide par rapport à la conduite (1) reliée à l'élément de raccordement enfichable (4, 5), auquel cas l'enveloppe (10, 11) est conçue sous forme de boîtier et les extrémités (9) du conducteur électrique (8) sont reliées dans l'enveloppe (10, 11) à un dispositif électrique ou une connexion électrique (19), **caractérisé en ce que** le conducteur électrique (8) au minimum est conçu pour chauffer la conduite (1) conçue en particulier comme conduite d'urée dans un système catalytique destiné à réduire les NOₓ dans les gaz d'échappement oxygénés d'un véhicule automobile.

2. Dispositif selon la revendication 1, **caractérisé en ce que** l'enveloppe (10, 11) est disposée autour de l'élément de liaison (6, 7), qui entoure par ajustage serré l'extrémité (2, 3) de la conduite poussée sur l'élément de raccordement enfichable (4, 5).

3. Dispositif selon la revendication 1 ou 2, **caractérisé en ce qu'**un joint (12) entourant la conduite (1) sur toute sa circonférence est disposé entre l'enveloppe (10, 11) et la conduite (1).

4. Dispositif selon l'une des revendications 1 à 3, **caractérisé en ce que** l'enveloppe (10, 11) est reliée de manière étanche à l'élément de raccordement enfichable (4, 5).

5. Dispositif selon l'une des revendications 1 à 4, **caractérisé en ce que** les deux extrémités (9) du conducteur électrique (8) sont reliées à des raccords électriques (13, 14) au niveau de l'une des deux extrémités (2, 3) de la conduite.

6. Dispositif selon l'une des revendications 1 à 5, **caractérisé en ce que** le conducteur électrique (8) au minimum est disposé sur ou dans la conduite (1).

7. Dispositif selon l'une des revendications 1 à 6, **caractérisé en ce que** le conducteur électrique (8) au minimum est un consommateur électrique.
